# EUROPEAN PATENT APPLICATION

(11) **EP 4 181 267 A1**
(43) Date of publication of application: **17.05.2023**
(21) Application number: 22849927.3
(22) Date of filing: 29.07.2022
(51) Int. Cl.: H01M 10/42, H01M 4/62, H01M 4/13, H01M 10/052

(54) **INSULATION COMPOSITION HAVING EXCELLENT WET ADHESION FOR ELECTRODES, AND METHOD FOR MANUFACTURING SAME**

(30) Priority: 30.07.2021 KR 20210100879; 22.07.2022 KR 20220090835
(71) Applicant: LG Energy Solution, Ltd., Seoul 07335 (KR)
(72) Inventor: CHOI, Sang A, Daejeon 34122 (KR); JANG, Seong Keun, Daejeon 34122 (KR); PARK, Sung Chul, Daejeon 34122 (KR); YOON, Sung Soo, Daejeon 34122 (KR)
(74) Representative: Plasseraud IP
(86) International application number: PCT/KR2022/011197
(87) International publication number: WO 2023/008952

(57) **Abstract**

The present technology relates to an insulating composition having excellent wet adhesion and a preparation method thereof, and since an insulating coating layer has excellent wet adhesion in a liquid electrolyte, there is an advantage in that migration of lithium ions in an overlay region of an electrode can be blocked to suppress capacity expression and the like.

## Description

### [Technical Field]

This application claims the benefit of priority based on Korean Patent Application No. 10-2021-0100879, filed on July 30, 2021, and Korean Patent Application No. 10-2022-0090835, filed on July 22, 2022, the entire contents of the Korean patent applications are incorporated herein by reference.

The present disclosure relates to an insulating composition for an electrode having excellent wet adhesion and a preparation method thereof.

### [Background Art]

As the technology for mobile devices is developed and the demand for mobile devices increases, the demand for secondary batteries as a power source is rapidly increasing, and accordingly, many studies have been conducted on batteries which can meet various needs.

Typically, in terms of a battery shape, there is a high demand for thin prismatic and pouch-type batteries that can be applied to products such as mobile phones and the like. Also, in terms of a material, there is a high demand for lithium secondary batteries such as lithium cobalt polymer batteries excellent in energy density, discharge voltage, and safety.

One of the main research tasks related to the secondary batteries is to enhance safety. Battery safety-related accidents are mainly caused by the arrival of an abnormal high temperature state due to a short circuit between a positive electrode and a negative electrode. That is, in normal situations, since a separator is provided between a positive electrode and a negative electrode, electrical insulation is maintained. On the other hand, in abnormal situations in which a battery is excessively charged or discharged, the dendritic growth of an electrode material or an internal short circuit caused by foreign substances occurs, sharp objects such as nails, screws, and the like penetrate a battery, or a battery is excessively deformed by an external force, existing separators have limitations.

Generally, a microporous membrane formed of a polyolefin resin is mainly used as a separator, but the heat-resistant temperature thereof is about 120 to 160 °C, so heat resistance is insufficient. Therefore, when an internal short circuit occurs, the separator contracts due to the heat of the short-circuit reaction, and thus the short-circuit part is enlarged, and thermal runaway in which the high heat of reaction is generated occurs. Since this phenomenon mainly occurs at the end of an electrode current collector coated with an electrode active material in the stacking of an electrode, various methods for lowering the possibility of a short circuit of an electrode by an external impact or high temperature have been attempted.

Specifically, to resolve the internal short circuit of a battery, a method of attaching an insulating tape or applying an insulating liquid to the portion of the non-coating part and active material layer of an electrode to form an insulating coating layer has been proposed. For example, there is a method of applying an insulating binder onto the portion of the non-coating part and active material layer of a positive electrode or applying an insulating liquid in which a mixture of the binder and inorganic particles is dispersed in a solvent to form a coating (hereinafter, referred to as an insulating coating layer).

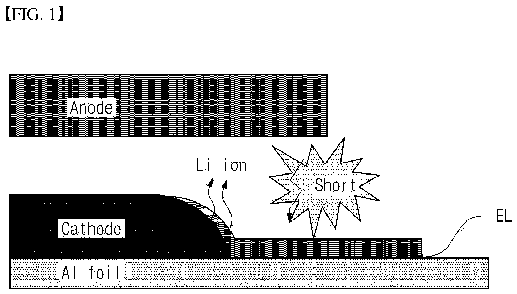

Meanwhile, an electrode in an actual secondary battery is present in an immersed state in a liquid electrolyte, and a conventional insulating coating layer exhibits degraded adhesion (hereinafter, referred to as wet adhesion) while being immersed in a liquid electrolyte and thus does not block the migration of lithium ions in the overlay region of the electrode to cause capacity expression (see FIG. 1). Particularly, when capacity is expressed in the overlay region of the electrode, lithium ions may be precipitated, and this may cause the safety of a battery cell to be degraded.

Therefore, there is a need to develop an insulating composition having excellent wet adhesion.

### [Disclosure]

### [Technical Problem]

The present disclosure is directed to providing an insulating composition for an electrode having excellent wet adhesion and a preparation method thereof.

### [Technical Solution]

One aspect of the present technology provides an insulating composition for an electrode, which includes: an aqueous binder substituted with a non-aqueous solvent; and inorganic particles. In an embodiment, a weight ratio of the inorganic particle and the aqueous binder ranges from 1:99 to 95:5.

In a specific embodiment, the weight ratio of the inorganic particle and the aqueous binder may range from 45:55 to 90:10.

In a specific embodiment, the non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), γ-butyrolactone, methyl alcohol, ethyl alcohol, and isopropyl alcohol.

In another embodiment, the inorganic particles may be one or more selected from the group consisting of AlOOH, Al₂O₃, γ-AlOOH Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SIC), and boron nitride (BN).

In another embodiment, the aqueous binder may be one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

For example, in the insulating composition for an electrode according to the present technology, the non-aqueous organic solvent may be N-methyl-pyrrolidone (NMP), and the aqueous binder may be styrene-butadiene rubber.

In an embodiment, the inorganic particles may have an average particle diameter ranging from 0.01 µm to 100 µm.

In a more specific embodiment, the insulating composition according to the present technology may include first and second inorganic particles having mutually different particle diameters and may have a bimodal particle size distribution.

For example, the insulating composition may have a viscosity at 25 °C of 50 cP to 50,000 cP.

In an embodiment, the insulating composition according to the present technology may be applied to a positive electrode of a secondary battery.

Another aspect of the present technology provides a method of preparing the above-described insulating composition for an electrode. In an embodiment, the method of preparing the insulating composition for an electrode according to the present technology includes: mixing an aqueous binder dispersed in water and a non-aqueous solvent; and performing solvent substitution by removing the water through a thermal treatment.

In an embodiment, the method may further include, after the solvent substitution, allowing inorganic particles to be included.

In a specific embodiment, a weight ratio of the inorganic particle and the aqueous binder may range from 1:99 to 95:5.

In another embodiment, the thermal treatment in the solvent substitution may be performed at 80 to 150 °C.

### [Advantageous Effects]

An insulating composition for an electrode having excellent wet adhesion and a preparation method thereof according to the present technology are provided, and since the insulating composition has excellent wet adhesion in a liquid electrolyte, there is an advantage in that the migration of lithium ions in the overlay region of an electrode can be blocked to suppress capacity expression and the like.

### [Brief Description of the Drawings]

FIG. 1 is a schematic diagram showing the migration of lithium ions in an overlay region of an electrode.
FIG. 2 shows results of measuring the wet adhesion of a coating layer formed of an insulating composition in examples and comparative examples.
FIG. 3 is a graph obtained by measuring discharge capacity to evaluate a capacity expression of battery cells of Examples 5 to 7(room-temperature discharge characteristics).
FIG. 4 is a graph obtained by measuring discharge capacity to evaluate the capacity expression of the battery cells of Examples 5 to 7(high-temperature discharge characteristics).

### [Detailed Description of the Preferred Embodiments]

As the present invention allows for various changes and a variety of embodiments, particular embodiments will be described in detail in the detailed description.

However, this is not intended to limit the present invention to specific embodiments, and it should be understood that all changes, equivalents, or substitutes within the spirit and technical scope of the present invention are included in the present invention.

In the present disclosure, it should be understood that the term "include(s)" or "have(has)" is merely intended to indicate the presence of features, numbers, steps, operations, components, parts, or combinations thereof, and not intended to preclude the possibility of the presence of addition of one or more other features, numbers, steps, operations, components, parts, or combinations thereof.

In addition, in the present technology, when a portion of a layer, film, region, plate, or the like is referred to as being "on" another portion, this includes not only the case where the portion is "directly on" but also the case where there is another portion interposed therebetween. Conversely, when a portion of a layer, film, region, plate, or the like is referred to as being "under" another portion, this includes not only the case where the portion is "directly under" but also the case where there is another portion interposed therebetween. Also, herein, what is referred to as being disposed "on" may include being disposed not only on an upper part but also on a lower part.

As used herein, an "insulating coating layer" refers to an insulating member formed by application from at least a portion of the non-coating part of an electrode current collector to at least a portion of an electrode active material layer and drying.

As used herein, "wet adhesion" refers to the adhesion of an insulating coating layer as measured in an immersed state in a liquid electrolyte. More specifically, the wet adhesion may be measured by immersing a metal specimen including an insulating coating layer formed therein in a liquid electrolyte, applying ultrasonic waves, and then determining whether the insulating coating layer is swelled or detached.

As used herein, a "metal specimen" is a space where an insulating coating layer is formed and may refer to a metal current collector used in manufacture of an electrode, specifically, a metal current collector blanked to have a predetermined width and a predetermined length. For example, the metal specimen may be aluminum, copper, or an aluminum alloy.

As used herein, an "overlay region" may refer to a region where an insulating coating layer is formed in an electrode. More specifically, in an electrode in which an active material layer is formed, the insulating coating layer covers from at least a portion of a non-coating part to at least a portion of the active material layer, and a region where an insulating coating layer is formed on the active material layer is referred to as an overlay region.

Hereinafter, the present invention will be described in further detail.

### Insulating composition

One aspect of the present technology provides an insulating composition for an electrode, which includes: an aqueous binder substituted with a non-aqueous solvent; and inorganic particles. Specifically, a weight ratio of the inorganic particle and the aqueous binder ranges from 1:99 to 95:5.

Since the insulating composition for an electrode according to the present technology has excellent wet adhesion in a liquid electrolyte, there is an advantage in that the migration of lithium ions in the overlay region of an electrode can be blocked to suppress capacity expression and the like.

Generally, an electrode in a secondary battery is present in an immersed state in a liquid electrolyte, and accordingly, a conventional insulating coating layer exhibits degraded wet adhesion while being immersed in a liquid electrolyte and does not block the migration of lithium ions in the overlay region of the electrode to cause capacity expression. Particularly, when capacity is expressed in the overlay region of the electrode, lithium ions may be precipitated, which may cause the stability of a battery cell to be degraded.

In the present technology, an insulating composition for an electrode, which includes an aqueous binder substituted with a non-aqueous solvent used as a solvent of an electrode slurry and inorganic particles dispersed therein, may be provided to enhance wet adhesion a liquid electrolyte. That is, the insulating composition enhances wet adhesion when applied to an electrode, and thus the migration of lithium ions in the overlay region of the electrode can be suppressed, and lithium ions can be prevented from being precipitated. Accordingly, when applied to an electrode of a secondary battery, the insulating composition can enhance the stability of the secondary battery.

In a specific embodiment, the insulating composition for an electrode according to the present technology has a composition in which inorganic particles and an aqueous binder are mixed in a ratio of 1:99 to 95:5. When an insulating coating layer is formed of the insulating composition for an electrode, wet adhesion can be excellent.

Meanwhile, the wet adhesion of the insulating coating layer may be measured by immersing a metal specimen including an insulating coating layer formed therein in a liquid electrolyte, applying ultrasonic waves, and then determining whether the insulating coating layer formed in the metal specimen is swelled or detached.

The liquid electrolyte used in the measurement of wet adhesion may include an organic solvent and an electrolyte salt, and the electrolyte salt may be a lithium salt. As the lithium salt, any lithium salt that is typically used in a non-aqueous liquid electrolyte for a lithium secondary battery may be used without limitation. For example, an anion of the lithium salt may include any one or two or more selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, CF₃(CF₂)₇SO₃⁻, CF₃CO₂⁻, CH₃CO₂⁻, SCN⁻, and (CF₃CF₂SO₂)₂N⁻.

As the above-described organic solvent included in the liquid electrolyte, any organic solvent that is typically used in a liquid electrolyte for a lithium secondary battery may be used without limitation. For example, an ether, an ester, an amide, a linear carbonate, a cyclic carbonate, or the like may be used alone or in combination of two or more thereof. Among them, a cyclic carbonate, a linear carbonate, or a carbonate compound which is a mixture thereof may be typically used.

In addition, the insulating composition for an electrode according to the present technology may be applied to a positive electrode, and the non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), γ-butyrolactone, methyl alcohol, ethyl alcohol, and isopropyl alcohol.

In a specific embodiment, the non-aqueous organic solvent may be one or more selected from the group consisting of NMP, DMF, DMAc, and DMSO, specifically, one or more selected from the group consisting of NMP, DMF, and DMAc.

For example, the non-aqueous organic solvent may be an amide-based organic solvent, and the same solvent as a solvent used in preparation of a positive electrode slurry may be used. The non-aqueous organic solvent may be NMP.

In a specific embodiment, when applied as an insulating coating layer of a positive electrode, the insulating composition according to the present technology may be applied and dried simultaneously with a positive electrode active material layer. In this case, when the same solvent as a solvent of the positive electrode slurry is used as a solvent of the insulating composition, a difference in a drying rate and the like is reduced, and thus cracking and the like that occur at the boundary between the insulating coating layer and the positive electrode active material layer can be prevented. Particularly, the NMP solvent may be used as a substitution solvent, and the aqueous binder may be present as an NMP-substituted binder.

In addition, the aqueous binder may be one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose. In a specific embodiment, the aqueous binder may be one or more selected from the group consisting of styrene-butadiene rubber, acrylate styrene-butadiene rubber, acrylonitrile-butadiene rubber, and acrylonitrile-butadiene-styrene rubber. For example, the aqueous binder may be styrene-butadiene rubber.

Conventionally, polyvinylidene fluoride (hereinafter, referred to as PVDF) was used as a binder for an insulating coating layer of a positive electrode, but PVDF exhibits degraded wet adhesion while being immersed in a liquid electrolyte. Accordingly, in the present technology, styrene-butadiene rubber (SBR) may be used as a binder polymer. Meanwhile, when SBR is used as the binder polymer, water may be used as a solvent. However, in this case, when an insulating composition is applied simultaneously with a positive electrode slurry, the gelation of PVDF, which is an organic binder used as a binder of a positive electrode, may occur between the insulating composition and the positive electrode slurry.

In addition, the insulating composition may enhance the safety of a battery by including inorganic particles, and the strength of the insulating coating layer may also be enhanced. The amount of the inorganic particles may be appropriately adjusted in consideration of the viscosity of an insulating composition, thermal resistance, an insulating property, a filling effect, dispersibility, stability, or the like. Generally, as the size of inorganic particles increases, the viscosity of a composition including the same increases, and the possibility of sedimentation in an insulating composition increases. Also, as the size of the inorganic particles decreases, thermal resistance increases. Therefore, considering the above points, an appropriate type and size of inorganic particles may be selected, and if necessary, at least two types of inorganic particles may be used.

In a specific embodiment, the inorganic particles may be one or more selected from the group consisting of AlOOH, Al₂O₃, γ-AlOOH Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SIC), and boron nitride (BN), specifically, one or more selected from the group consisting of AlOOH, Al₂O₃, γ-AlOOH and Al(OH)₃. For example, the inorganic particles may be AlOOH.

A weight ratio of the inorganic particle and the aqueous binder may range from 1:99 to 95:5, specifically, 45:55 to 90:10 or 50:50 to 90:10. For example, a weight ratio of the inorganic particle and aqueous binder in the insulating composition may be 50:50. Meanwhile, when the amount of the aqueous binder is excessively small, it may be difficult to obtain an insulating effect desired in the present technology, and adhesion with an electrode may be degraded. On the other hand, when the amount of the aqueous binder is excessively large, the insulating composition drips in an overlay region in coating of an electrode, and thus the safety of a battery cell may be degraded.

The inorganic particles may have an average particle diameter of 0.01 µm to 100 µm, specifically, 0.5 µm to 80 µm, 1 µm to 50 µm, 2 µm to 30 µm, 3 µm to 20 µm, or 5 µm to 10 µm. When the size of inorganic particles falls within the above-described range, the inorganic particles can be uniformly applied in the electrode, and the resistance of lithium ions can be minimized to ensure the performance of a lithium secondary battery.

In another embodiment, the insulating composition may include first and second inorganic particles having mutually different particle diameters and may have a bimodal particle size distribution. This means that the inorganic particles are composed of a mixture of small-sized particles and large-sized particles, and small-sized second inorganic particles may fill the empty space between large-sized first inorganic particles, and an appropriate amount of inorganic particles may be dispersed. However, the present invention is not limited thereto.

Meanwhile, in the insulating composition for an electrode according to the present technology, the inorganic particles and SBR may be included in an amount of 1 to 50 parts by weight, 5 to 40 parts by weight, or 10 to 40 parts by weight with respect to 100 parts by weight of the NMP solvent.

The insulating composition may have a viscosity at 25 °C of 50 cP to 50,000 cP, 100 cP to 45,000 cP, 1,000 cP to 40,000 cP, 2,000 cP to 35,000 cP, 3,000 cP to 30,000 cP, 4,000 cP to 20,000 cP, or 5,000 cP to 10,000 cP. Within the above-described range, adhesion to an electrode active material layer can be enhanced, and coatability, processability, and the like can be enhanced.

In an embodiment, the insulating composition for an electrode according to the present technology may be prepared by mixing an aqueous binder dispersed in water and a non-aqueous solvent; and performing solvent substitution by removing the water through thermal treatment. In the present technology, by forming an aqueous binder substituted with a non-aqueous solvent, an insulating coating layer including the aqueous binder may be applied to a positive electrode vulnerable to moisture.

In another embodiment, the method further includes, after the solvent substitution, allowing inorganic particles to be included. Specifically, a weight ratio of the inorganic particle and the aqueous binder ranges from 1:99 to 95:5. A mixing ratio of the inorganic particle and the aqueous binder is as described above.

In an embodiment, the thermal treatment in the solvent substitution may be performed at 80 to 150 °C. The thermal treatment is intended to remove a water component contained in the aqueous binder by evaporation. The thermal treatment may be performed at atmospheric pressure (1 atm) and may also be performed under vacuum or reduced pressure conditions (0.1 atm or more and less than 1 atm) for rapid evaporation of water. The thermal treatment is intended to effectively evaporate water and may be performed at 80 to 150 °C or 100 to 130 °C.

### Electrode for secondary battery

Another aspect of the present technology provides an electrode for a secondary battery which includes:
a metal current collector;
an active material layer provided on the metal current collector; and
an insulating coating layer which covers from at least a portion of a non-coating part in which the active material layer is not provided to at least a portion of the active material layer,
wherein the metal current collector includes the non-coating part, and
the insulating coating layer includes inorganic particles and an aqueous binder substituted with a non-aqueous organic solvent.

The electrode for a secondary battery according to the present technology has an advantage in that the migration of lithium ions in the overlay region of the electrode can be blocked to suppress capacity expression and the like by including the insulating coating layer having excellent wet adhesion.

In a specific embodiment, the inorganic particles of the insulating coating layer may be one or more selected from the group consisting of AlOOH, Al₂O₃, γ-AlOOH Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SIC), and boron nitride (BN), specifically, one or more selected from the group consisting of AlOOH, Al₂O₃, γ-AlOOH and Al(OH)₃. For example, the inorganic particles may be AlOOH.

In addition, the aqueous binder may be one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose. In a specific embodiment, the aqueous binder may be one or more selected from the group consisting of styrene-butadiene rubber, acrylate styrene-butadiene rubber, acrylonitrile-butadiene rubber, and acrylonitrile-butadiene-styrene rubber. For example, the aqueous binder may be styrene-butadiene rubber.

In a specific embodiment, the aqueous binder may be an aqueous binder substituted with a non-aqueous organic solvent or styrene-butadiene rubber substituted with an amide-based solvent, for example, styrene-butadiene rubber substituted with an NMP solvent. More specifically, the insulating coating layer may be formed by applying the above-described insulating composition for an electrode of a secondary battery so that the insulating composition covers at least a portion of the non-coating part to at least a portion of the active material layer and drying the same at about 50 to 300 °C. In this case, in the insulating coating layer, a solvent is removed in the drying process, and styrene-butadiene rubber dispersed in the solvent is substituted with NMP, and thus styrene-butadiene rubber substituted with NMP may be present.

In an embodiment, the insulating coating layer may have a thickness ranging from 0.2 µm to 100 µm, specifically 1 µm to 50 µm, and more specifically 1 µm to 30 µm, 2 µm to 30 µm, 3 µm to 20 µm, or 5 µm to 15 µm. When the coating layer is excessively thin, it may be difficult to expect an effect of enhancing safety by applying the insulating coating layer.

In addition, the electrode for a secondary battery may be a positive electrode.

Furthermore, the active material layer may include a positive electrode active material. In a specific embodiment, any typically used positive electrode active material may be used as the positive electrode active material, and a lithium manganese oxide, a lithium cobalt oxide, a lithium nickel oxide, a lithium iron oxide, or a lithium composite oxide made by combining them may be used, but the present invention is not limited thereto.

In addition, the amount of the positive electrode active material may be 85 to 95 parts by weight, specifically, 88 to 95 parts by weight, 90 to 95 parts by weight, 86 to 90 parts by weight, or 92 to 95 parts by weight with respect to 100 parts by weight of the active material layer.

Additionally, the conductive material may be used to enhance the performance, such as electrical conductivity, of the positive electrode, and one or more selected from the group consisting of natural graphite, artificial graphite, carbon black, acetylene black, Ketjen black, and carbon fiber may be used. For example, the conductive material may include acetylene black.

In addition, the conductive material may be included in an amount of 1 to 10 parts by weight, specifically 2 to 8 parts by weight or 2 to 6 parts by weight with respect to 100 parts by weight of the active material layer.

Additionally, the binder may include one or more resins selected from the group consisting of a polyvinylidene fluoride-hexafluoropropylene copolymer (PVDF-co-HFP), polyvinylidene fluoride, polyacrylonitrile, polymethyl methacrylate, and a copolymer thereof. As an example, the binder may include polyvinylidene fluoride.

In addition, the binder may be included in an amount of 1 to 10 parts by weight, specifically, 2 to 8 parts by weight or 2 to 6 parts by weight with respect to 100 parts by weight of the active material layer.

Although there is no particular limitation on the average thickness of the active material layer, the average thickness may specifically be 0.1 µm to 20 µm, more specifically, 0.1 µm to 15 µm, 0.1 µm to 10 µm, 2 µm to 10 µm, 4 µm to 10 µm, or 5 µm to 9 µm.

Meanwhile, as a current collector of the positive electrode for a lithium secondary battery according to the present technology, any current collector that does not cause a chemical change in a battery and has high conductivity may be used. For example, stainless steel, aluminum, nickel, titanium, calcined carbon, or the like may be used, and aluminum or stainless steel whose surface has been treated with carbon, nickel, titanium, silver, or the like may also be used. Also, fine irregularities may be formed on the surface of the current collector to increase the adhesion of the positive electrode active material, and various forms such as a film, a sheet, a foil, a net, a porous material, a foam, and a non-woven fabric are possible. Also, the average thickness of the current collector may be appropriately applied in a range of 3 to 500 µm in consideration of the conductivity and total thickness of a positive electrode to be manufactured.

### Lithium secondary battery

Still another aspect of the present technology provides a lithium secondary battery including the above-described electrode for a secondary battery according to the present technology.

As described above, the electrode for a secondary battery according to the present technology may be used as a positive electrode in the lithium secondary battery.

The lithium secondary battery according to the present technology may include the above-described positive electrode according to the present technology, a negative electrode, and a separator interposed between the positive electrode and the negative electrode.

Particularly, the lithium secondary battery according to the present technology has an advantage in that the migration of lithium ions in the overlay region of the electrode can be blocked to suppress capacity expression and the like due to the insulating coating layer having excellent wet adhesion in a liquid electrolyte. Accordingly, the lithium secondary battery according to the present technology can exhibit enhanced stability.

In this case, the negative electrode may include a negative electrode current collector and a negative electrode active material layer provided on the negative electrode current collector and including a negative electrode active material. Specifically, the negative electrode is manufactured by applying a negative electrode active material on a negative electrode current collector, followed by drying and pressing, and as necessary, the negative electrode may optionally further include a conductive material, an organic binder polymer, a filler, and the like as described above.

As the negative electrode active material, for example, carbon and graphite materials such as graphite having a completely layered crystal structure such as natural graphite, soft carbon having a low crystallinity layered crystal structure (graphene structure; a structure in which hexagonal honeycomb planes of carbon are arranged in layers), hard carbon in which these structures are mixed with amorphous parts, artificial graphite, expanded graphite, carbon fiber, non-graphitizable carbon, carbon black, carbon nanotubes, fullerenes, activated carbon, and the like; metal composite oxides such as LiₓFe₂O₃ (0≤x≤1), LiₓWO₂ (0≤x≤1), SnₓMe_{1- x}Me'_{y}O_{z} (Me: Mn, Fe, Pb, Ge; Me': Al, B, P, Si, Group 1, Group 2 and Group 3 elements of the periodic table, halogens; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene and the like; Li-Co-Ni-based materials; titanium oxide; lithium titanium oxide, and the like may be used.

In an embodiment, the negative electrode active material may include both graphite and silicon (Si)-containing particles. As the graphite, any one or more of natural graphite having a layered crystal structure and artificial graphite having an isotropic structure may be included, and as the silicon (Si)-containing particles, silicon (Si) particles, silicon oxide (SiO₂) particles, or a mixture of silicon (Si) particles and silicon oxide (SiO₂) particles, which are particles including silicon (Si) as a main metal component, may be included.

In this case, the negative electrode active material may include, with respect to 100 parts by weight of the negative electrode active material, 80 to 95 parts by weight of graphite and 1 to 20 parts by weight of silicon (Si)-containing particles. In the present technology, by adjusting the amounts of the graphite and silicon (Si)-containing particles included in the negative electrode active material within the above-described ranges, lithium consumption and irreversible capacity loss during initial charging and discharging of the battery can be reduced, and charge capacity per unit mass can be enhanced.

In addition, the negative electrode active material layer may have an average thickness of 100 µm to 200 µm, specifically, 100 µm to 180 µm, 100 µm to 150 µm, 120 µm to 200 µm, 140 µm to 200 µm, or 140 µm to 160 µm.

Additionally, the negative electrode current collector is not particularly limited as long as it does not cause a chemical change in the battery and has high conductivity. For example, copper, stainless steel, nickel, titanium, calcined carbon, or the like may be used, and copper or stainless steel whose surface has been treated with carbon, nickel, titanium, silver, or the like may also be used.

In addition, like the positive electrode current collector, the negative electrode current collector may have fine irregularities formed on the surface thereof to increase the adhesion of the negative electrode active material, and various forms such as a film, a sheet, a foil, a net, a porous body, a foam, and a nonwoven body are possible. Also, the average thickness of the negative electrode current collector may be appropriately applied in a range of 3 to 500 µm in consideration of the conductivity and total thickness of a negative electrode to be manufactured.

Additionally, the separator is interposed between the positive electrode and the negative electrode, and an insulating thin film having high ion permeability and mechanical strength is used. Although the separator is not particularly limited as long as it is typically used in the art, specifically, a sheet or non-woven fabric made of chemical-resistant and hydrophobic polypropylene, glass fiber, polyethylene, or the like may be used, and in some cases, a composite separator in which a porous polymer substrate such as the sheet or non-woven fabric is coated with inorganic particles/organic particles by an organic binder polymer may be used. When a solid electrolyte such as a polymer or the like is used as an electrolyte, the solid electrolyte may serve as the separator. Also, the separator may have an average pore diameter of 0.01 to 10 µm and an average thickness of 5 to 300 µm.

Meanwhile, the positive electrode and the negative electrode may be accommodated in a cylindrical battery, a prismatic battery, or a pouch-type battery while being wound in the form of a jelly roll or accommodated in a folding or stack-folding type in a pouch-type battery, but the present invention is not limited thereto.

In addition, the lithium salt-containing liquid electrolyte according to the present technology may consist of a liquid electrolyte and a lithium salt. As the liquid electrolyte, a non-aqueous organic solvent, an organic solid electrolyte, an inorganic solid electrolyte, or the like may be used

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, or the like may be used.

As the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymers including ionic dissociation groups, or the like may be used.

As the inorganic solid electrolyte, for example, nitrides, halides, or sulfates of Li, such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like, may be used.

The lithium salt is a substance that is readily soluble in a non-aqueous electrolyte, and for example, LiCl, LiBr, LiI, LiClO₄, LiBF₄, LiB10Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, imide, or the like may be used.

In addition, in order to improve charging/discharging characteristics, flame retardancy, and the like, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the liquid electrolyte. In some cases, a halogen-containing solvent such as carbon tetrachloride, ethylene trifluoride, or the like may be further included to impart incombustibility, carbon dioxide gas may be further included to enhance high-temperature storage characteristics, and fluoro-ethylene carbonate (FEC), propene sultone (PRS), or the like may be further included.

Meanwhile, yet another aspect of the present technology provides a battery module including the above-described secondary battery as a unit cell and also provides a battery pack including the battery module.

The battery pack may be used as power sources of medium-to-large-sized devices that require high-temperature stability and high rate characteristics such as long cycle characteristics, and specific examples of the medium-to-large-sized devices include: power tools powered by electric motors; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; power storage systems; and the like, and more specific examples thereof include HEVs, but the present invention is not limited thereto.

Furthermore, the positive electrode and the negative electrode may be accommodated in a cylindrical battery, a prismatic battery, or a pouch-type battery while being wound in the form of a jelly roll or accommodated in a folding or stack-folding type in a pouch-type battery. For example, the lithium secondary battery according to the present technology may be a pouch-type battery.

As described above, the lithium secondary battery including the positive electrode active material according to the present technology may be used in a battery module or battery pack including a plurality of batteries as a unit cell. Specifically, the lithium secondary battery is useful in the fields of portable devices such as mobile phones, notebook computers, digital cameras, and the like and electric vehicles such as hybrid electric vehicles (HEV) and the like.

Hereinafter, the present invention will be described in further detail with reference to examples and experimental examples.

However, it should be understood that the following examples and experimental examples are given for the purpose of illustration only and are not intended to limit the scope of the present invention.

### Example 1.

To 100 g of a styrene-butadiene rubber (hereinafter, referred to as SBR, BM451B commercially available from ZEON Chemicals) binder dispersed in water as a solvent in a ratio of 60:40 (parts by weight), 500 g of an N-methyl-2-pyrrolidone (NMP) solvent was added and stirred. Then, the stirred mixture was heated at 100 to 120 °C for 2 hours to completely evaporate water contained therein to prepare an NMP-substituted SBR binder. Then, the NMP-substituted SBR binder and inorganic particles were mixed in a weight ratio of 50:50 and stirred to prepare an insulating composition. The prepared insulating composition had a viscosity of 5,000 cP.

### Examples 2 to 4 and Comparative Examples 1 and 2.

An insulating composition was obtained in the same manner as in Example 1, except that the amounts of inorganic particles and a binder are changed in the preparation of an insulating composition.

Specific compositions of Examples 1 to 4 and Comparative Examples 1 and 2 are shown in the following Table 1.

**[Table 1]**

| Classification | Insulating composition | | | |
|---|---|---|---|---|
| | Solvent | Inorganic particle | Binder | Inorganic particle:Binder (weight ratio) |
| Example 1 | NMP | AlOOH | SBR | 50:50 |
| Example 2 | NMP | AlOOH | SBR | 60:40 |
| Example 3 | NMP | AlOOH | SBR | 75:25 |
| Example 4 | NMP | AlOOH | SBR | 80:20 |
| Comparative Example 1 | NMP | AlOOH | PVDF | 80:20 |
| Comparative Example 2 | NMP | AlOOH | PVDF | 88:12 |

### Experimental Example 1. Measurement of wet adhesion of insulating coating layer

In order to evaluate the adhesion of an insulating coating layer according to the present technology, an experiment was performed as follows.

### Metal specimen including insulating coating layer formed therein

Each of the insulating compositions prepared in Examples 1 to 4 and Comparative Examples 1 and 2 was applied onto an aluminum metal foil and dried to prepare a metal specimen in which an about 10 µm-thick insulating coating layer was formed. The metal specimen including the insulating coating layer formed therein was blanked to a size of 2 cm × 2 cm using a blanking device for adhesion measurement.

### Application of ultrasonic waves

200 g of a liquid electrolyte (EC/EMC=3/7 (vol%)) was input into a 250 ml beaker, and the metal specimen including the insulating layer formed therein was immersed in the liquid electrolyte. In order to control the movement of the metal specimen, the metal specimen was immobilized with a jig.

Then, ultrasonic waves were applied to the liquid electrolyte in which the metal specimen was immersed using a sonicator (4200 commercially available from BANDELIN). In this case, conditions for applying ultrasonic waves were as follows.
- Frequency: 20 kHz
- Tip diameter: 13 mm (TS-113)
- Amplitude: 100%
(in use of 13 mm tip, peak-to-peak 132 µm)

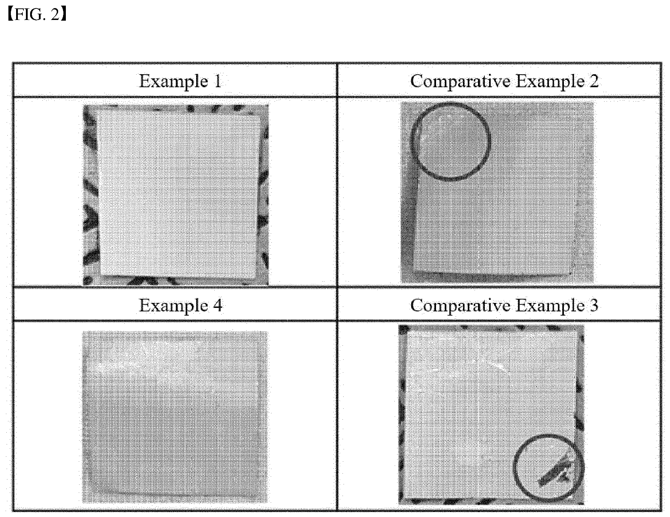

Results thereof are shown in the following Table 2 and FIG. 2.

**[Table 2]**

| Classification | Example 1 | Example 2 | Example 3 | Example 4 | Comparative Example 1 | Comparative Example 2 |
|---|---|---|---|---|---|---|
| Composition | AlOOH: SB R =50:50 | AlOOH:SB R =60:40 | AlOOH:SB R =75:25 | AlOOH:SB R =80:20 | AlOOH:PV DF =80:20 | AlOOH:PV DF =88:12 |
| Time (mins) | 19 | 19 | 19 | 15 | 5 | 10 |
| Termination temperature (°C) | 109 | 109 | 109 | 100 | 71 | 87 |
| Comparison of wet adhesion | no swelling and no detachment | no swelling and no detachment | no swelling and no detachment | no swelling and no detachment | swelling | swelling and detachment |

FIG. 2 is a diagram showing results of measuring the wet adhesion of insulating coating layers of Examples 1 and 4 and Comparative Examples 1 and 2. Referring to Table 2 and FIG. 2, the electrode specimen of Example 1 did not show swelling or detachment of the insulating coating layer. However, in the case of Example 1, when 109 °C was reached, measurement was stopped as a measurement environment was changed by evaporating a solvent due to an increase in the temperature of a liquid electrolyte due to application of ultrasonic waves and the EMC boiling point of 107.5 °C.

Although not shown in the figure, like Example 1, the electrode specimens of Examples 2 and 3 did also not show swelling or detachment of the insulating coating layer. However, when 109 °C was reached, measurement was stopped as a measurement environment was changed by evaporating the solvent due to the EMC boiling point of 107.5 °C.

In the case of Example 4, swelling or detachment did not occur in the electrode specimen during 15 minutes of application of ultrasonic waves to a liquid electrolyte. However, although not shown in the figure, when 108 °C was reached as the temperature of a liquid electrolyte was increased due to continuous application of ultrasonic waves, swelling and detachment in the electrode specimen occurred.

In addition, in the case of Comparative Examples 1 and 2, swelling and detachment in the electrode specimen occurred in just 5 minutes of application of ultrasonic waves to a liquid electrolyte.

From the above results, it could be confirmed that the insulating coating layers of Examples had excellent wet adhesion compared to the insulating coating layers of Comparative Examples 1 and 2.

### Experimental Example 2. Evaluation of capacity expression of battery cell

In order to evaluate the performance of the positive electrode including an insulating coating layer according to the present technology, a half-cell was fabricated, and then capacity expression was evaluated.

### Fabrication of half-cell

96 parts by weight of LiNi_{0.8}Co_{0.1}Mn_{0.1}O₂ as a positive electrode active material, 2 parts by weight of polyvinylidene fluoride (PVDF) as a binder, and 2 parts by weight of carbon black as a conductive material were weighed and mixed in an N-methylpyrrolidone (NMP) solvent to prepare a slurry for a positive electrode active material layer. Then, the positive electrode slurry was applied onto an aluminum foil, dried, and roll-pressed to manufacture a positive electrode including a positive electrode active material layer (average thickness: 130 µm).

Then, the positive electrode was dip-coated with each insulating composition obtained in Examples 1 to 3 and then dried in a convection oven (130 °C) to form a 10 µm-thick insulating coating layer in the positive electrode. A lithium foil as a negative electrode and a liquid electrolyte in which 1 M LiPF₆ was added in a solvent (EC:DMC:DEC=1:2:1) were used to fabricate a coin-type half-cell.

**[Table 3]**

| Insulating coating layer | Battery |
|---|---|
| Example 1 | Example 5 |
| Example 2 | Example 6 |
| Example 3 | Example 7 |

### Measurement of discharge capacity

The discharge characteristics of the batteries of Examples 5 to 7 were evaluated under the following conditions. Also, the discharge characteristics were measured each at room temperature (25 °C) and high temperature (45 °C).
- Discharge: 0.1C, 0.33C, 0.5C, 1.0C, 2.5V, cut-off

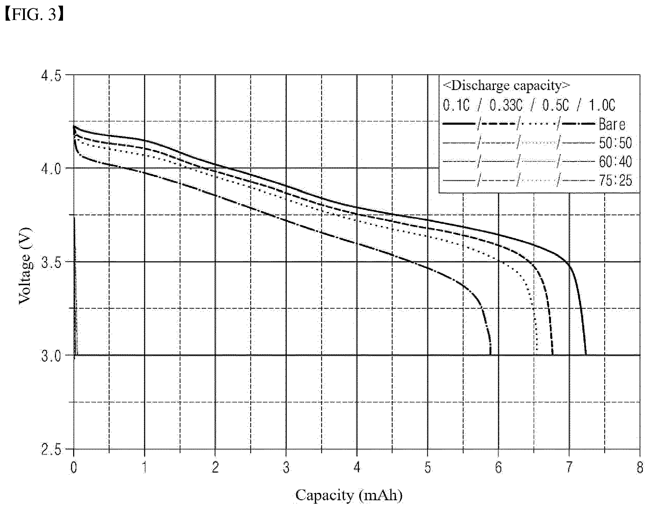

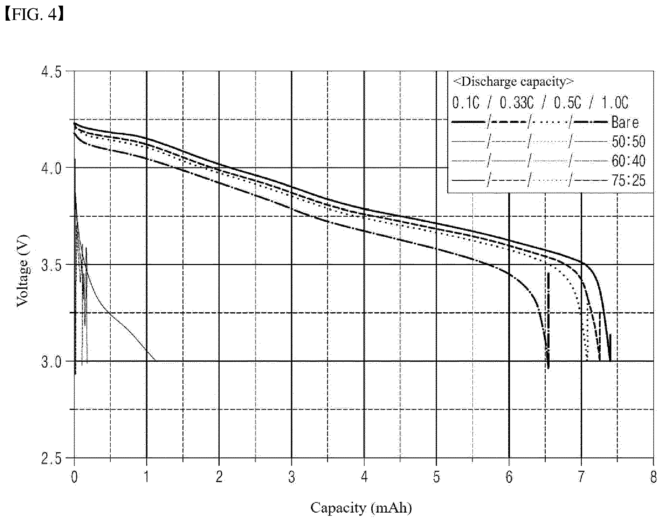

Meanwhile, to compare the capacity expression of each battery, a battery cell including an electrode including no insulating coating layer was used as Comparative Example 3. Results thereof are shown in Tables 4 and 5 and FIGS. 3 and 4.

**[Table 4]**

| Classification | Insulating composition | | | | Room-temperature discharge rate (%) | | | |
|---|---|---|---|---|---|---|---|---|
| | Solvent | Inorganic particle | Binder | Inorganic particle:Binder (weight ratio) | 0.1C | 0.33C | 0.5C | 1.0C |
| Comparative Example 3 | - | - | - | - | 100.00 | 100.00 | 100.00 | 100.00 |
| Example 5 | NMP | AlOOH | SBR | 50:50 | 0.33 | 0.06 | 0.05 | 0.00 |
| Example 6 | NMP | AlOOH | SBR | 60:40 | 0.60 | 0.09 | 0.05 | 0.03 |
| Example 7 | NMP | AlOOH | SBR | 75:25 | 0.27 | 0.06 | 0.03 | 0.00 |

**[Table 5]**

| Classification | Insulating composition | | | | High-temperature discharge rate (%) | | | |
|---|---|---|---|---|---|---|---|---|
| | Solvent | Inorganic particle | Binder | Inorganic particle:Binder (weight ratio) | 0.1C | 0.33C | 0.5C | 1.0C |
| Comparative Example 3 | - | - | - | - | 100.00 | 100.00 | 100.00 | 100.00 |
| Example 5 | NMP | AlOOH | SBR | 50:50 | 2.23 | 0.21 | 0.15 | 0.05 |
| Example 6 | NMP | AlOOH | SBR | 60:40 | 1.41 | 0.18 | 0.15 | 0.03 |
| Example 7 | NMP | AlOOH | SBR | 75:25 | 15.35 | 0.18 | 0.15 | 0.03 |

Referring to Tables 4 and 5 and FIGS. 3 and 4, in the case of high-temperature discharging (45 °C), the battery of Example 7 partially expressed capacity when discharged at 0.1C, whereas the batteries of Examples 5 and 6 hardly expressed capacity in the case of room-temperature discharging (25 °C).

The above result is considered to be due to the fact that the insulating coating layer prevents the migration of lithium ions in the overlay region of the electrode to suppress capacity expression and the like during discharging by having excellent wet adhesion in a liquid electrolyte. Accordingly, in the case of the lithium secondary battery according to the present technology, degradation of capacity according to a cycle increase can be suppressed, and safety can be improved.

While the present invention has been described above with reference to the exemplary embodiments, it can be understood by those skilled in the art that various modifications and alterations may be made without departing from the spirit and technical scope of the present invention described in the appended claims.

Therefore, the technical scope of the present invention should be defined by the appended claims and not limited by the detailed description of the specification.

## Claims

1. An insulating composition for an electrode, comprising:
an aqueous binder substituted with a non-aqueous solvent; and
an inorganic particle,
wherein a weight ratio of the inorganic particle to the aqueous binder ranges from 1:99 to 95:5.

2. The insulating composition of claim 1, wherein the weight ratio of the inorganic particle to the aqueous binder ranges from 45:55 to 90:10.

3. The insulating composition of claim 1, wherein the non-aqueous organic solvent is one or more selected from the group consisting of N-methyl-pyrrolidone (NMP), dimethyl formamide (DMF) dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), γ-butyrolactone, methyl alcohol, ethyl alcohol, and isopropyl alcohol.

4. The insulating composition of claim 1, wherein the inorganic particle is one or more selected from the group consisting of AlOOH, Al₂O₃, γ-AlOOH Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SIC), and boron nitride (BN).

5. The insulating composition of claim 1, wherein the aqueous binder is one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

6. The insulating composition of claim 1, wherein the non-aqueous organic solvent is N-methyl-pyrrolidone (NMP), and the aqueous binder is styrene-butadiene rubber.

7. The insulating composition of claim 1, wherein the inorganic particle has an average particle diameter ranging from 0.01 µm to 100 µm.

8. The insulating composition of claim 7, wherein the insulating composition includes first and second inorganic particles having mutually different particle diameters, and has a bimodal particle size distribution.

9. The insulating composition of claim 1, wherein the insulating composition has a viscosity at 25 °C of 50 cP to 50,000 cP.

10. A secondary battery comprising the insulating composition of claim 1 and a positive electrode, wherein the insulating composition is applied to the positive electrode.

11. A method of preparing an insulating composition for an electrode, comprising:
mixing an aqueous binder dispersed in water and a non-aqueous solvent; and
performing solvent substitution by removing the water through a thermal treatment.

12. The method of claim 11, further comprising, after the solvent substitution, allowing an inorganic particle to be included.

13. The method of claim 12, wherein a weight ratio of the inorganic particle to the aqueous binder ranges from 1:99 to 95:5.

14. The method of claim 11, wherein the thermal treatment in the solvent substitution is performed at 80 to 150 °C.
